# EUROPEAN PATENT APPLICATION

(11) **EP 4 734 617 A1**
(43) Date of publication of application: **29.04.2026**
(21) Application number: 23941934.4
(22) Date of filing: 21.06.2023
(51) Int. Cl.: H04W 52/02

(54) **CONFIGURATION METHOD AND APPARATUS, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/101721
(87) International publication number: WO 2024/259632

(57) **Abstract**

The present disclosure relates to a configuration method and apparatus, and a storage medium. The configuration method includes: receiving first configuration information, wherein the first configuration information is used for configuring first patterns on a plurality of service carriers, each service carrier corresponds to a first pattern, each first pattern is a cell discontinuous transmission mode or a cell discontinuous reception mode, and the first configuration information causes the first patterns of the plurality of service carriers to have an overlapping active region in a time domain. The configuration method can reduce energy consumption.

## Description

### TECHNICAL FIELD

The present disclosure relates to the field of communication technology, and in particular to a configuration method and apparatus, and a storage medium.

### BACKGROUND

To save energy in network devices, discontinuous reception (DRX) or discontinuous transmission (DTX) can be employed. The DTX may affect the signal transmission of terminals. For example, the network device may periodically stop transmitting certain information. The DRX may affect the signal reception of terminals. For example, the network device may periodically stop receiving certain information.

### SUMMARY

It is needed to save energy consumption at the terminal device.

This disclosure presents a configuration method and apparatus, and a storage medium.

According to a first aspect of the embodiments of this disclosure, a configuration method is provided, including:
receiving first configuration information, where the first configuration information is used to configure first patterns on a plurality of serving carriers, with each serving carrier corresponding to one first pattern, where the first pattern is either a cell discontinuous transmission mode or a cell discontinuous reception mode, and the first configuration information causes the first patterns of the plurality of serving carriers to have overlapping active regions in time domain.

According to a second aspect of the embodiments of this disclosure, a configuration method is provided, including:
sending first configuration information, where the first configuration information is used to configure first patterns on a plurality of serving carriers, with each serving carrier corresponding to one first pattern, where the first pattern is either a cell discontinuous transmission mode or a cell discontinuous reception mode, and the first configuration information causes the first patterns of the plurality of serving carriers to have overlapping active regions in time domain.

According to a third aspect of the embodiments of this disclosure, a terminal is provided, including:
a transceiver module, configured to receive first configuration information, where the first configuration information is used to configure first patterns on a plurality of serving carriers, with each serving carrier corresponding to one first pattern, where the first pattern is either a cell discontinuous transmission mode or a cell discontinuous reception mode, and the first configuration information causes the first patterns of the plurality of serving carriers to have overlapping active regions in time domain.

According to a fourth aspect of the embodiments of this disclosure, a network device is provided, including:
a transceiver module, configured to send first configuration information, where the first configuration information is used to configure first patterns on a plurality of serving carriers, with each serving carrier corresponding to the one mode, where the first pattern is either a cell discontinuous transmission mode or a cell discontinuous reception mode, and the first configuration information causes the first patterns of the plurality of serving carriers to have overlapping active regions in time domain.

According to a fifth aspect of the embodiments of this disclosure, a terminal is provided, including:
one or more processors;
where the terminal is configured to execute any of the configuration methods in the first aspect.

According to a sixth aspect of the embodiments of this disclosure, a network device is provided, including:
one or more processors;
where the network device is configured to execute any of the configuration methods in the second aspect.

According to a seventh aspect of the present disclosure, a communication system is proposed, including a terminal and a network device, where the terminal is configured to implement any of the configuration methods in the first aspect, and the network device is configured to implement any of configuration methods of the second aspect.

According to an eighth aspect of the present disclosure, a storage medium is provided that stores instructions, where when the instructions are executed on a communication device, the execution causes the communication device to perform the configuration method described in any one of the first or second aspects.

### BRIEF DESCRIPTION OF THE DRAWINGS

The accompanying drawings described herein are provided to further illustrate the embodiments of the present disclosure and form a part of this application, and the schematic embodiments and descriptions thereof are used to explain the embodiments of the present disclosure and do not constitute an improper limitation of the embodiments of this disclosure. In the drawings:
FIG. 1A is a schematic diagram of a wireless communication system architecture provided in an embodiment of this disclosure;
FIG. 1B is a schematic diagram of a carrier-corresponding DTX or DRX provided in an embodiment of this disclosure;
FIG. 2A is an interactive schematic diagram of a configuration method provided in an embodiment of this disclosure;
FIG. 2B is a schematic diagram of configuration information on a plurality of serving carriers provided in an embodiment of this disclosure;
FIG. 2C is a schematic diagram of configuration information on a plurality of serving carriers provided in an embodiment of this disclosure;
FIG. 2D is a schematic diagram of configuration information on a plurality of serving carriers provided in an embodiment of this disclosure;
FIG. 2E is an interactive schematic diagram of a configuration method provided in an embodiment of this disclosure;
FIG. 3A is a flowchart of a configuration method provided in an embodiment of this disclosure;
FIG. 3B is a flowchart of a configuration method provided in an embodiment of this disclosure;
FIG. 4A is a flowchart of a configuration method provided in an embodiment of this disclosure;
FIG. 4B is a flowchart of a configuration method provided in an embodiment of this disclosure;
FIG. 5 is an interactive schematic diagram of the configuration method according to an embodiment of the present disclosure;
FIG. 6 is a flowchart illustrating a configuration method according to an embodiment of the present disclosure;
FIG. 7A- FIG. 7B are schematic diagrams of the configuration apparatus according to embodiments of the present disclosure;
FIG. 8A- FIG. 8B are schematic diagrams of the configuration apparatus shown according to embodiments of the present disclosure.

### DETAILED DESCRIPTION

This disclosure presents a configuration method and apparatus, and storage medium.

In a first aspect, embodiments of this disclosure provide a configuration method, including:
receiving first configuration information, where the first configuration information is used to configure first patterns on a plurality of serving carriers, with each serving carrier corresponding to one first pattern, where the first pattern is either a cell discontinuous transmission mode or a cell discontinuous reception mode, and the first configuration information causes the first patterns of the plurality of serving carriers to have overlapping active regions in time domain.

In the above embodiments, when the terminal uses a plurality of serving carriers and each serving carrier is configured with the first pattern, energy consumption can be effectively saved.

In the above embodiments, after the network device is configured with the first pattern on a plurality of serving carriers, some or all terminals under the management of the network device are in operating state during the active period and in sleep state during the inactive period, which can effectively save energy consumption.

In conjunction with some embodiments of the first aspect, in some embodiments, the first configuration information includes a plurality of second configuration information, each second configuration information corresponding to the first pattern on at least one serving carrier.

In the above embodiments, configuring some of the plurality of serving carriers of the terminal separately can improve the flexibility of configuration.

In conjunction with some embodiments of the first aspect, in some embodiments, receiving the first configuration information includes:
performing multiple receptions, receiving at least one of the second configuration information each time.

In the above embodiments, configurations for different serving carriers can be received multiple times, improving configuration flexibility.

In conjunction with some embodiments of the first aspect, in some embodiments, first parameters of the first patterns of the plurality of serving carriers configured by the first configuration information have an association relationship.

In the above embodiments, by establishing a correlation between the first parameters of the first patterns of different serving carriers, a prerequisite is provided for the first patterns of plurality of serving carriers to have overlapping active regions in the time domain.

In conjunction with some embodiments of the first aspect, in some embodiments, the first parameters include at least one of cycle, offset and first duration, and the first duration is an active duration or inactive duration within one cycle.

In the above embodiments, the first pattern is configured in different dimensions to make its use more flexible.

In conjunction with some embodiments of the first aspect, in some embodiments, the first patterns of the plurality of serving carriers configured by the first configuration information have a same cycle, a same offset, and a same first duration.

In the above embodiments, it is ensured that the active regions of the first patterns of different serving carriers completely overlap in the time domain.

In conjunction with some embodiments of the first aspect, in some embodiments, the first patterns of the plurality of serving carriers configured by the first configuration information have a same cycle, a same offset, and different first durations.

In the above embodiments, under the premise of the same cycle and the same offset, it can be ensured that the first patterns of plurality of serving carriers have as many overlapping active regions as possible in the time domain.

In conjunction with some embodiments of the first aspect, in some embodiments,
the cycle of the first patterns of the plurality of serving carriers configured by the first configuration information is an integer multiple of a first cycle, and a difference in offset among the first patterns of different serving carriers is an integer multiple of the first cycle, where the first cycle is a smallest cycle among the first patterns of the plurality of serving carriers.

In the above embodiments, when the cycle of the first pattern of each serving carrier is an integer multiple of the first cycle, it can be ensured that the first patterns of plurality of serving carriers have as many overlapping active regions as possible in the time domain.

In conjunction with some embodiments of the first aspect, in some embodiments, the plurality of serving carriers belong to the same carrier group.

In the above embodiments, considering that different carrier groups correspond to different transceiver links, the first patterns of the serving carriers in the same carrier group have overlapping active regions in the time domain, which can save operating time and reduce power consumption on the transceiver links of the same carrier group.

In conjunction with some embodiments of the first aspect, in some embodiments, the plurality of serving carriers belong to a first frequency range, or the plurality of serving carriers belong to a second frequency range.

In the above embodiments, the power consumption of the terminal in the low-frequency band can be reduced, and the power consumption of the terminal in the millimeter-wave high-frequency band can be reduced.

In a second aspect, embodiments of this disclosure propose a configuration method, including:
sending first configuration information, where the first configuration information is used to configure first patterns on a plurality of serving carriers, with each serving carrier corresponding to one first pattern, where the first pattern is either a cell discontinuous transmission mode or a cell discontinuous reception mode, and the first configuration information causes the first patterns of the plurality of serving carriers to have overlapping active regions in time domain.

In conjunction with some embodiments of the second aspect, in some embodiments, the first configuration information includes a plurality of second configuration information, each second configuration information corresponding to the first pattern on at least one serving carrier.

In conjunction with some embodiments of the second aspect, in some embodiments, sending the first configuration information includes:
performing multiple transmission, sending at least one of the second configuration information each time.

In conjunction with some embodiments of the second aspect, in some embodiments, first parameters in the first patterns of the plurality of serving carriers configured by the first configuration information have an association relationship.

In conjunction with some embodiments of the second aspect, in some embodiments, the first parameters include at least one of cycle, offset and first duration, and the first duration is an active duration or inactive duration within one cycle.

In conjunction with some embodiments of the second aspect, in some embodiments, the first patterns of the plurality of serving carriers configured by the first configuration information have a same cycle, a same offset, and a same first duration.

In conjunction with some embodiments of the second aspect, in some embodiments, the first patterns of the plurality of serving carriers configured by the first configuration information have a same cycle, a same offset, and different first durations.

In conjunction with some embodiments of the second aspect, in some embodiments, the cycle of the first patterns of the plurality of serving carriers configured by the first configuration information is an integer multiple of a first cycle, and a difference in offset among the first patterns of different serving carriers is an integer multiple of the first cycle, where the first cycle is a smallest cycle among the first patterns of the plurality of serving carriers.

In conjunction with some embodiments of the second aspect, in some embodiments, the plurality of serving carriers belong to a same carrier group.

In conjunction with some embodiments of the second aspect, in some embodiments, the plurality of serving carriers belong to a first frequency range, or the plurality of serving carriers belong to a second frequency range.

In a third aspect, embodiments of this disclosure provide a terminal, including:
a transceiver module, configured to receive first configuration information, where the first configuration information is used to configure first patterns on a plurality of serving carriers, with each serving carrier corresponding to one first pattern, where the first pattern is either a cell discontinuous transmission mode or a cell discontinuous reception mode, and the first configuration information causes the first patterns of the plurality of serving carriers to have overlapping active regions in time domain.

In a fourth aspect, embodiments of this disclosure provide a network device, including:
a transceiver module, configured to send first configuration information, where the first configuration information is used to configure first patterns on a plurality of serving carriers, with each serving carrier corresponding to the one mode, where the first pattern is either a cell discontinuous transmission mode or a cell discontinuous reception mode, and the first configuration information causes the first patterns of the plurality of serving carriers to have overlapping active regions in time domain.

In a fourth aspect, embodiments of this disclosure provide a terminal, including:
one or more processors;
where the terminal is configured to execute any of the configuration methods in the first aspect.

In a fifth aspect, embodiments of this disclosure provide a network device, including:
one or more processors;
where the network device is configured to execute any of the configuration methods in the second aspect.

In a sixth aspect, embodiments of this disclosure provide a communication system including a terminal and a network device, where the terminal is configured to implement any of the configuration methods in the first aspect, and the network device is configured to implement any of configuration methods of the second aspect.

In a seventh aspect, embodiments of this disclosure provide a storage medium storing instructions that, when executed on a communication device, cause the communication device to perform the configuration method described in any one of the first or second aspects.

The embodiments of this disclosure will now be further described in conjunction with the accompanying drawings and specific implementation details.

Exemplary embodiments will now be described in detail, examples of which are illustrated in the accompanying drawings. When the following description relates to the drawings, unless otherwise indicated, the same numerals in different drawings denote the same or similar elements. The embodiments described in the following exemplary embodiments do not represent all embodiments consistent with those of this disclosure. Rather, they are merely examples of apparatuses and methods consistent with some aspects of this disclosure as detailed in the appended claims.

The terminology used in this disclosure is for the purpose of describing particular embodiments only and is not intended to be limiting of the present disclosure. The singular forms "a" and "the" as used in this disclosure and the appended claims are also intended to include the plural forms unless the context clearly indicates otherwise. It should also be understood that the term "and/or" as used herein refers to and includes any and all possible combinations of one or more of the associated listed items.

It should be understood that although the terms first, second, third, etc., may be used to describe various information in embodiments of this disclosure, such information should not be limited to these terms. These terms are only used to distinguish information of the same type from one another. For example, without departing from the scope of embodiments of this disclosure, first instruction information may also be referred to as second instruction information, and similarly, second instruction information may also be referred to as first instruction information. Depending on the context, the words "if" and "suppose" as used herein may be interpreted as "when", "while", or "in response to a determination".

Embodiments of this disclosure are described in detail below, examples of which are illustrated in the accompanying drawings, where the same or similar reference numerals denote the same or similar elements throughout. The embodiments described below with reference to the accompanying drawings are exemplary and intended to explain this disclosure, and should not be construed as limiting this disclosure.

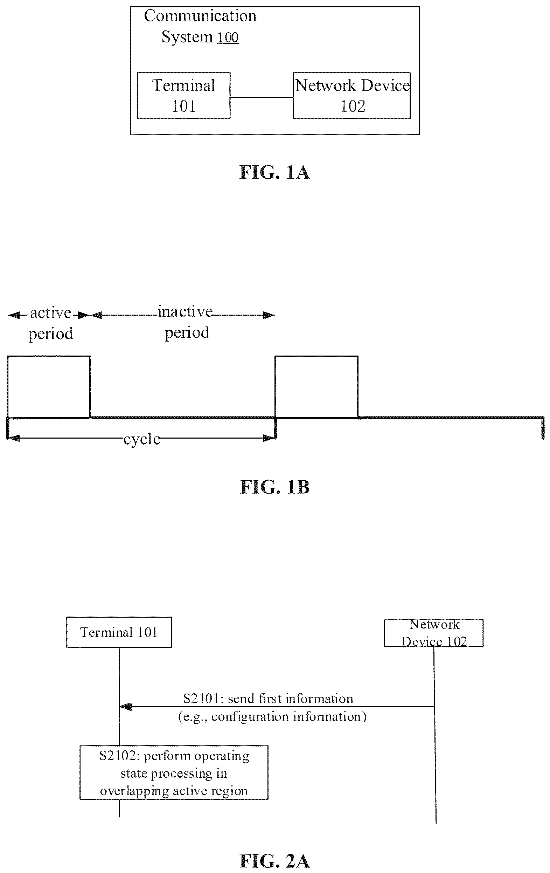

As shown in FIG. 1, the method provided in this embodiment can be applied to a wireless communication system 100, which may include a terminal 101 and a network device 102. It should be noted that the wireless communication system 100 may also include other devices, and this application does not limit the devices included in the wireless communication system 100.

It should be understood that the wireless communication system 100 described above is applicable to both low-frequency and high-frequency scenarios. Application scenarios for the wireless communication system 100 include, but are not limited to, long-term evolution (LTE) systems, LTE frequency division duplex (FDD) systems, LTE time division duplex (TDD) systems, worldwide interoperability for microwave access (WiMAX) communication systems, cloud radio access network (CRAN) systems, future 5^{th}-generation (5G) systems, new radio (NR) communication systems, or future evolved public land mobile network (PLMN) systems.

The terminal 101 shown above can be a terminal, access terminal, terminal unit, terminal station, mobile station (MS), remote station, remote terminal, mobile terminal, wireless communication device, terminal agent, etc. The terminal 101 may have wireless transceiver capabilities, enabling it to communicate (e.g., wirelessly) with one or more network devices in one or more communication systems, and to receive network services provided by the network devices. These network devices include, but are not limited to, the network device 102 shown in the diagram.

The terminal 101 can be a cellular phone, cordless phone, session initiation protocol (SIP) phone, wireless local loop (WLL) station, personal digital assistant (PDA) device, handheld device with wireless communication capabilities, computing device or other processing device connected to a wireless modem, vehicle-mounted device, wearable device, terminal in a future 5G network, or terminal in a future evolved PLMN network, etc.

For example, the network device 102 can be an access network device (or access point). The access network device refers to a device that provides network access functionality, such as a radio access network (RAN) base station, etc. Specifically, it may include a base station (BS), or a base station and radio resource management device used to control the base station, and may also include relay stations (relay device), access points, and base stations in future 5G networks, base stations in future evolved PLMN networks, or NR base stations, etc., and can be wearable devices or vehicle-mounted devices. The network device 102 can also be a communication chip with a communication module.

For example, the network device 101 includes, but is not limited to: next-generation base stations (gnodeB, gNB) in 5G, evolved node B (eNB) in LTE systems, radio network controllers (RNC), node B (NB) in WCDMA systems, radio controllers and base station controllers (BSC) in CRAN systems, base transceiver stations (BTS) in GSM or CDMA systems, home base stations (e.g., home evolved nodeB, or home node B, HNB), baseband units (BBU), transmitting and receiving points (TRP), transmitting points (TP), or mobile switching centers, etc.

In this disclosure, cell discontinuous transmission (cell DTX) or cell discontinuous reception (cell DRX) can be configured for a serving carrier.

In some embodiments, a cell DTX on a serving carrier can be configured, and the configuration information can be referred to as the cell DTX on-off pattern.

In some embodiments, the configuration information for cell DTX includes at least one of the following: cycle, offset, and first duration. The first duration is either the duration of an active period or the duration of an inactive period.

In some embodiments, the network device 102 is in operating state during the active period and sends downlink information normally, while the network device 102 is in sleep state during the inactive period and does not send some of the downlink information.

In some embodiments, after the network device 102 performs cell DTX on a serving carrier, the terminal 101 is in an active state during the active period and may be in an active state or a sleep state during the inactive period.

In some embodiments, the power consumption of the terminal 101 when it is in the operating state is higher than the power consumption when it is in the sleep state.

In some embodiments, the operating state can be replaced by the normal operating state, the wake-up state, and the active state; the sleep state can be replaced by the abnormal operating state and the inactive state.

In some embodiments, a cell DRX on a serving carrier can be configured, and the configuration information can be referred to as the cell DRX on-off pattern.

In some embodiments, the configuration information of the cell DRX includes at least one of the following: cycle, offset, and first duration. The first duration is the duration of an active period or the duration of an inactive period.

In some embodiments, the offset may be replaced by a time-domain offset.

In some embodiments, the offset corresponds to the start time of the active period or the start time of the inactive period.

In one example, the active period of cell DRX can be labeled as DRX-on, and the inactive period of cell DRX can be labeled as DRX-off.

In some embodiments, the network device 102 is in operating state during the active period and receives uplink information normally, while the network device 102 is in sleep state during the inactive period and does not receive some of the uplink information.

In some embodiments, after the network device 102 performs cell DRX on a serving carrier, the terminal 101 is in an active state during the active period and may be in an active state or a sleep state during the inactive period.

In one example, the active period of cell DTX can be labeled as DTX-on, and the inactive period of cell DTX can be labeled as DTX-off.

As shown in FIG. 1B, the duration of one cycle is the sum of the duration of an active period and the duration of an inactive period.

In one example, the cycle is 160 ms and the offset is 40 ms, meaning the starting points of the time domain cycles are 40 ms, 200 ms, 360 ms, 520 ms, and so on. The duration of the active period is 40 ms, or the duration of the active period is 120 ms. Each time domain cycle starts from the DRX-on state.

In this disclosure, cell discontinuous transmission (cell DTX) or cell discontinuous reception (cell DRX) can be configured for a plurality of serving carriers.

In some embodiments, at a given moment, when any one of the plurality of serving carriers of the terminal 101 is in the active period of cell DTX or cell DRX, the terminal 101 is in an operating state. Since the power consumption of terminal 101 in the operating state is higher than that in the sleep state, it is necessary to consider how to reduce the power consumption of the terminal 101 when cell DTX or cell DRX is configured on a plurality of serving carriers.

In this embodiment of the disclosure, when the terminal 101 is configured with cell DTX or cell DRX on a plurality of serving carriers, the active periods of cell DTX or cell DRX on a plurality of serving carriers overlap as much as possible.

FIG. 2A is an interactive schematic diagram illustrating a configuration method according to an embodiment of the present disclosure. As shown in FIG. 2A, the embodiments of the present disclosure relate to a configuration method, which includes:

**In step S2101,** the network device 102 sends first information to the terminal 101.

In some embodiments, the terminal 101 receives the first information.

In some embodiments, the first information is used to configure a first pattern.

In some embodiments, the first information is used to configure first patterns on a plurality of serving carriers.

In some embodiments, the first pattern is cell DTX, or cell DRX.

In some embodiments, the first information is first configuration information.

In some embodiments, the first configuration information is used to configure a first pattern.

In some embodiments, the first configuration information is used to configure first patterns on a plurality of serving carriers.

In some embodiments, each serving carrier corresponds to one first pattern.

In some embodiments, the first configuration information causes the first patterns of the plurality of serving carriers to have overlapping active regions in the time domain.

In some embodiments, the first parameters of the first patterns of the plurality of serving carriers configured by the first configuration information are associated with each other.

In some embodiments, the first parameter includes at least one of cycle, offset, and first duration, where the first duration is the active duration or inactive duration within one cycle.

In some embodiments, the offset may be replaced by a time-domain offset.

In some embodiments, the offset corresponds to the start time of the active period or the start time of the inactive period.

In one example, the active period of cell DRX can be labeled as DRX-on, and the inactive period of cell DRX can be labeled as DRX-off.

In some embodiments, the first patterns of the plurality of serving carriers configured by the first configuration information have the same cycle, the same offset, and the same first duration.

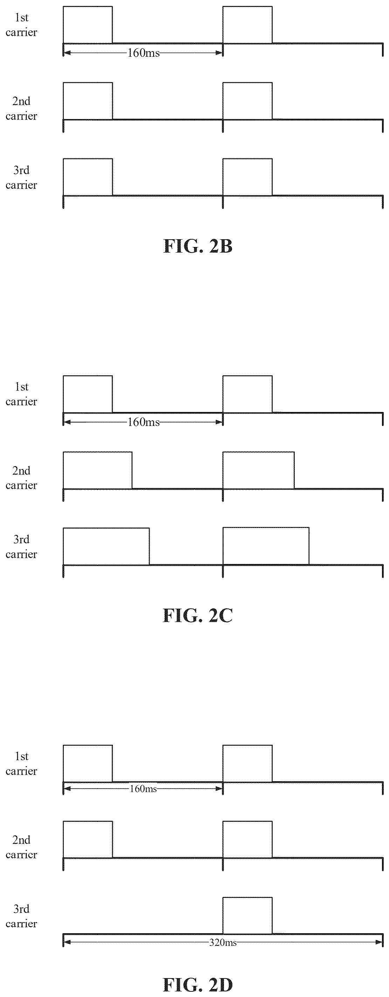

In one example, as shown in FIG. 2B, the terminal 101 corresponds to 3 serving carriers.

The first pattern of all three serving carriers is cell DTX, the period is 160 ms, the offset is 0 ms, and the duration of the active period is 40 ms.

Thus, the three serving carriers have a 40ms overlap during the active period of each cycle.

In another example, the terminal 101 corresponds to two serving carriers.

The first pattern of the first serving carrier is cell DTX, with a cycle of 160 ms, an offset of 0 ms, and an active period of 40 ms.

The first pattern of the second serving carrier is cell DRX, with a cycle of 160 ms, an offset of 0 ms, and an active period of 40 ms.

Thus, the two serving carriers have a 40ms overlap during the active period of each cycle.

In some embodiments, the first patterns of plurality of serving carriers configured by the first configuration information have the same cycle, the same offset, but different first durations.

In one example, as shown in FIG. 2C, the terminal 101 corresponds to 3 serving carriers.

The first pattern of the first serving carrier is cell DTX, with a cycle of 160 ms, an offset of 0 ms, and an active period of 40 ms.

The first pattern of the second serving carrier is cell DTX, with a cycle of 160 ms, an offset of 0 ms, and an active period of 60 ms.

The first pattern of the third serving carrier is cell DTX, with a cycle of 160 ms, an offset of 0 ms, and an active period of 80 ms.

Thus, the three serving carriers have a 40ms overlap during the active period of each cycle.

In another example, the terminal 101 corresponds to two serving carriers.

The first pattern of the first serving carrier is cell DTX, with a cycle of 160 ms, an offset of 0 ms, and an active period of 40 ms.

The first pattern of the second serving carrier is cell DRX, with a cycle of 160 ms, an offset of 0 ms, and an active period of 60 ms.

Thus, the two serving carriers have a 40ms overlap during the active period of each cycle.

In some embodiments, the cycles of the first patterns of the plurality of serving carriers configured by the first configuration information is an integer multiple of the first cycle, and the difference in offset among the first patterns of different serving carriers is an integer multiple of the first cycle, where the first cycle is the smallest cycle among the first patterns of the plurality of serving carriers.

In one example, as shown in FIG. 2D, the terminal 101 corresponds to 3 serving carriers.

The first pattern of the first serving carrier is cell DTX, with a cycle of 160 ms, an offset of 0 ms, and an active period of 40 ms.

The first pattern of the second serving carrier is cell DTX, with a cycle of 160 ms, an offset of 0 ms, and an active period of 40 ms.

The first pattern of the third serving carrier is cell DTX, with a cycle of 320ms, an offset of 160ms, and an active period of 40ms.

Thus, the three serving carriers have a 40ms overlap during the active period of each cycle.

In some embodiments, plurality of serving carriers belong to the same carrier group.

In some embodiments, plurality of serving carriers belong to a first frequency range (FR1).

Optionally, FR1 can be replaced with a low-frequency band.

In some embodiments, plurality of serving carriers belong to a second frequency range (FR2).

Optionally, FR2 can be replaced with a millimeter-wave high-frequency band.

In some embodiments, the network device 102 sends the first information to the terminal 101 on the primary carrier.

In some embodiments, the terminal 101 receives the first information on the primary carrier.

In some embodiments, the primary carrier is the primary carrier among the plurality of serving carriers.

In some embodiments, the primary carrier is used to carry signaling and manage the carriers of other serving carriers.

In some embodiments, the primary carrier may be replaced by the primary cell.

In some embodiments, the first information includes configuration information of a first pattern of the primary carrier and configuration information of the first patterns of other serving carriers besides the primary carrier.

In one example, the terminal 101 corresponds to three serving carriers, where the first serving carrier is the primary carrier. The network device 102 transmits first information on the first serving carrier. The first information includes configuration information for configuring the first pattern on the first serving carrier, configuration information for configuring the first pattern on the second serving carrier, and configuration information for configuring the first pattern on the third serving carrier.

In some embodiments, the first information is used to configure the first pattern for the primary carrier and the first patterns for other serving carriers besides the primary carrier.

In one example, the terminal 101 corresponds to three serving carriers, with the first serving carrier being the primary carrier. The network device 102 transmits the first information on the first serving carrier. The first information is used to configure the first pattern on the first serving carrier, the first pattern on the second serving carrier, and the first pattern on the third serving carrier.

**In step S2102,** the terminal 101 performs processing in the operating state in the overlapping active region.

The communication method involved in the embodiments of this disclosure may include at least one of steps S2101 to S2102. For example, S2101 may be implemented as a standalone embodiment, but is not limited thereto.

In some embodiments, step S2102 is optional, and one or more of these steps may be omitted or substituted in different embodiments.

In some embodiments, other alternative implementations may be described before or after the specification corresponding to FIG. 2A.

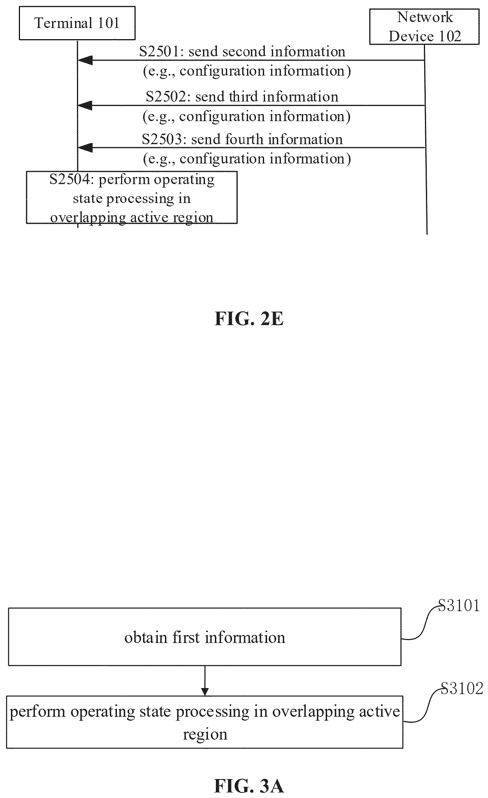

FIG. 2E is an interactive schematic diagram illustrating a configuration method according to an embodiment of the present disclosure. As shown in FIG. 2E, the embodiments of the present disclosure relate to a configuration method, which includes:

As shown in FIG. 2E, this disclosure relates to a configuration method, which includes:
**In step S2501,** the network device 102 sends second information to the terminal 101.

In some embodiments, the terminal 101 receives the second information.

In some embodiments, the second information is used to configure the first pattern.

In some embodiments, the second information is used to configure a first pattern on the first serving carrier.

In some embodiments, the second mode is cell DTX, or cell DRX.

In some embodiments, the second information is second configuration information.

In some embodiments, the second configuration information is used to configure the first pattern.

In some embodiments, the second configuration information is used to configure the first pattern on a first serving carrier.

In some embodiments, the second configuration information is used to configure a first pattern on one of the three serving carriers.

**In step S2502,** the network device 102 sends third information to the terminal 101.

In some embodiments, the terminal 101 receives the third information.

In some embodiments, the third information is used to configure the first pattern.

In some embodiments, the third information is used to configure the first pattern on a second serving carrier.

In some embodiments, the third mode is cell DTX, or cell DRX.

In some embodiments, the third information is third configuration information.

In some embodiments, the third configuration information is used to configure the first pattern.

In some embodiments, the third configuration information is used to configure the first pattern on the second serving carrier.

In some embodiments, the second configuration information is used to configure a first pattern on another serving carrier among the three serving carriers, other than the serving carrier configured by the first configuration information.

**In step S2503,** the network device 102 sends fourth information to the terminal 101.

In some embodiments, the terminal 101 receives the fourth information.

In some embodiments, the fourth information is used to configure the first pattern.

In some embodiments, the fourth information is used to configure the first pattern on a third serving carrier.

In some embodiments, the fourth mode is cell DTX, or cell DRX.

In some embodiments, the fourth information is the third configuration information.

In some embodiments, the fourth configuration information is used to configure the first pattern.

In some embodiments, the fourth configuration information is used to configure the first pattern on a third serving carrier.

In some embodiments, the second configuration information is used to configure a first pattern on another serving carrier among the three serving carriers, other than the serving carriers configured by the first configuration information and the second configuration information.

In some embodiments, the second configuration information, the third configuration information, and the third configuration information cause the first patterns of the plurality of serving carriers to have overlapping active regions in the time domain.

In some embodiments, the first parameters of the first pattern of the three serving carriers configured by the second configuration information, the third configuration information and the third configuration information are related.

In some embodiments, the first parameter includes at least one of cycle, offset, and first duration, where the first duration is the active duration or inactive duration within one cycle.

In some embodiments, the first patterns of the three serving carriers configured by the second configuration information, the third configuration information, and the third configuration information have the same cycle, the same offset, and the same first duration.

In one example, as shown in FIG. 2B, the terminal 101 corresponds to 3 serving carriers.

The second, third, and fourth configuration information are the same: all are cell DTX, all have a cycle of 160 ms, all have an offset of 0 ms, and all have an active period of 40 ms.

Thus, the three serving carriers have a 40ms overlap during the active period of each cycle.

In some embodiments, the first patterns of the three serving carriers configured by the second configuration information, the third configuration information, and the third configuration information have the same cycle, the same offset, but different first durations.

In one example, as shown in FIG. 2C, the terminal 101 corresponds to 3 serving carriers.

The first pattern of the first serving carrier configured by the second configuration information is cell DTX, with a cycle of 160 ms, an offset of 0 ms, and an active period duration of 40 ms;

The first pattern of the second serving carrier configured the third configuration information is cell DTX, with a cycle of 160 ms, an offset of 0 ms, and an active period duration of 60 ms.

The first pattern of the third serving carrier configured by the fourth configuration information is cell DTX, with a cycle of 160 ms, an offset of 0 ms, and an active period duration of 80 ms;

Thus, the three serving carriers have a 40ms overlap during the active period of each cycle.

In some embodiments,
The cycle of the first patterns of the plurality of serving carriers configured by the first configuration information is an integer multiple of a first cycle, and the difference in offset among the first patterns of different serving carriers is an integer multiple of the first cycle, where the first cycle is the smallest cycle among the first patterns of the plurality of serving carriers.

In one example, as shown in FIG. 2D, the terminal 101 corresponds to 3 serving carriers.

The first pattern of the first serving carrier configured by the second configuration information is cell DTX, with a cycle of 160 ms, an offset of 0 ms, and an active period duration of 40 ms;

The first pattern of the second serving carrier configured by the third configuration information is cell DTX, with a cycle of 160 ms, an offset of 0 ms, and an active period duration of 40 ms.

The first pattern of the third serving carrier configured by the fourth configuration information is cell DTX, with a cycle of 320ms, an offset of 160ms, and an active period duration of 40ms.

Thus, the three serving carriers have a 40ms overlap during the active period of each cycle.

In some embodiments, the plurality of serving carriers belong to the same carrier group.

In some embodiments, the plurality of serving carriers belong to a first frequency range (FR1).

In some embodiments, the plurality of serving carriers belong to a second frequency range (FR2).

**In step S2504,** the terminal 101 performs a processing corresponding to an operating state in the overlapping active region.

The communication method involved in the embodiments of this disclosure may include at least one of steps S2501 to S2504. For example, steps S2501 to S2503 may be implemented as independent embodiments, but are not limited thereto.

In some embodiments, step S2504 is optional, and one or more of these steps may be omitted or substituted in different embodiments.

In some embodiments, other alternative implementations described before or after the specification corresponding to FIG. 2E may be referred to.

FIG. 2E illustrates the case where the terminal 101 corresponds to 3 serving carriers. When the terminal 101 corresponds to N serving carriers, FIG. 2E includes M transmission steps. When M is equal to N, the information in each transmission step is used to configure a first pattern on one serving carrier. When M is less than N, the information in at least one transmission step is used to configure a first pattern on more than one serving carrier. Here, N is an integer greater than 1.

FIG. 3A is a flowchart illustrating a configuration method according to an embodiment of the present disclosure. As shown in FIG. 3A, the embodiments of the present disclosure relate to a configuration method, which includes:
**Step S3101:** obtain first information.

The optional implementation of step S3101 can be found in the optional implementation of step S2101 in FIG. 2A and other related parts in the embodiments involved in FIG. 2A, which will not be repeated here.

In some embodiments, the terminal 101 receives the first information sent by the network device 101.

**Step S3102:** perform a processing in an operating state in an overlapping active region.

The optional implementation of step S310 2 can be found in the optional implementation of step S210 2 in FIG. 2A and other related parts in the embodiment involved in FIG. 2A, which will not be repeated here.

The communication method involved in the embodiments of this disclosure may include at least one of steps S3101 to S3102. For example, step S3101 may be implemented as a standalone embodiment, but is not limited thereto.

In some embodiments, step S3102 is optional, and one or more of these steps may be omitted or substituted in different embodiments.

In some embodiments, other alternative implementations described before or after the specification corresponding to FIG. 3A may be referred to.

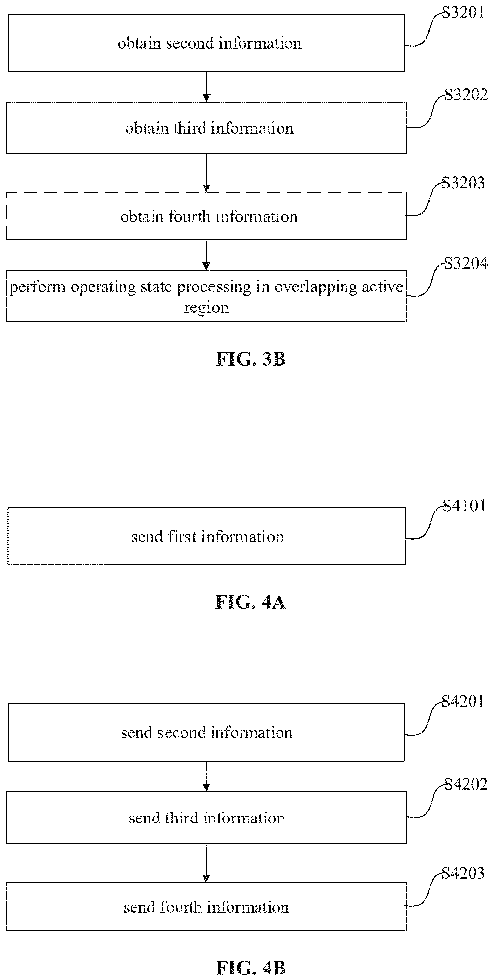

FIG. 3B is a flowchart illustrating a configuration method according to an embodiment of the present disclosure. As shown in FIG. 3A, the present disclosure relates to a configuration method, which includes:
**Step S3201:** obtain second information.

The optional implementation of step S3201 can be found in the optional implementation of step S2501 in FIG. 2E, and other related parts in the embodiments involved in FIG. 2E, which will not be repeated here.

In some embodiments, the terminal 101 receives the second information sent by the network device 101.

**Step S3202:** obtain third information.

The optional implementation of step S3202 can be found in the optional implementation of step S 502 in FIG. 2E, and other related parts in the embodiments involved in FIG. 2E, which will not be repeated here.

In some embodiments, the terminal 101 receives the third information sent by the network device 101.

**Step S3203:** obtain fourth information.

The optional implementation of step S3203 can be found in the optional implementation of step S2503 in FIG. 2E, and other related parts in the embodiments involved in FIG. 2E, which will not be repeated here.

In some embodiments, the terminal 101 receives the fourth information sent by the network device 101.

**Step S3204:** perform a processing in an operating state in an overlapping active region

The optional implementation of step S3204 can be found in the optional implementation of step S2504 in FIG. 2E, and other related parts in the embodiments involved in FIG. 2E, which will not be repeated here.

FIG. 3B illustrates the case where the terminal 101 corresponds to 3 serving carriers. When the terminal 101 corresponds to N serving carriers, FIG. 3B includes M transmission steps. When M is equal to N, the information in each transmission step is used to configure a first pattern on one serving carrier. When M is less than N, the information in at least one transmission step is used to configure a first pattern on more than one serving carrier. Here, N is an integer greater than 1.

FIG. 4A is a flowchart illustrating a configuration method according to an embodiment of the present disclosure. As shown in FIG. 4A, the present disclosure relates to a configuration method, which includes:
**Step S4101:** send first information.

The optional implementation of step S4101 can be found in the optional implementation of step S2101 in FIG. 2A and other related parts in the embodiments involved in FIG. 2A, which will not be repeated here.

In some embodiments, the network device 102 sends the first information to the terminal 101, but is not limited thereto; it may also send the first information to other entities.

In some embodiments, the first information is used to enable the terminal 101 to perform processing in an operating state within an overlapping active region.

FIG. 4B is a flowchart illustrating a configuration method according to an embodiment of the present disclosure. As shown in FIG. 4B, the present disclosure relates to a configuration method, which includes:
**Step S4201:** send second information.

The optional implementation of step S4201 can be found in the optional implementation of step S2501 in FIG. 2E, and other related parts in the embodiments involved in FIG. 2E, which will not be repeated here.

In some embodiments, the network device 102 sends the second information to the terminal 101, but is not limited thereto; it may also send the first information to other entities.

**Step S4202,** send third information.

The optional implementation of step S4202 can be found in the optional implementation of step S2502 in FIG. 2E, and other related parts in the embodiments involved in FIG. 2E, which will not be repeated here.

In some embodiments, the network device 102 sends the third information to the terminal 101, but is not limited thereto; it may also send the first information to other entities.

**Step S4203:** send fourth information.

The optional implementation of step S4203 can be found in the optional implementation of step S2503 in FIG. 2E, and other related parts in the embodiments involved in FIG. 2E, which will not be repeated here.

In some embodiments, the network device 102 sends the fourth information to the terminal 101, but is not limited thereto; it may also send the first information to other entities.

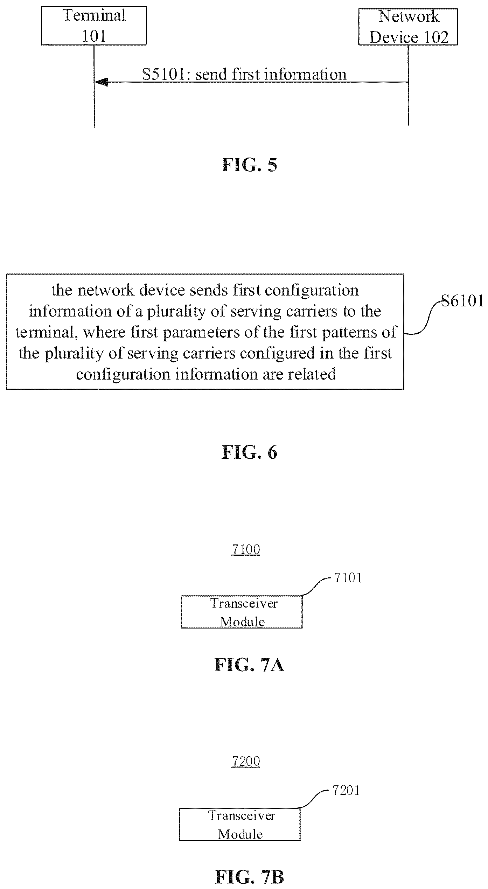

FIG. 5 is an interactive schematic diagram of the configuration method according to an embodiment of the present disclosure. As shown in FIG. 5, this embodiment of the disclosure relates to a configuration method, which includes:

**In step S5101,** the network device 101 sends first information to the terminal 102.

The optional implementations of step **S5101** can be found in the optional implementations of step S2101 in FIG. 2A, step S3101 in FIG. 3A, step S4101 in FIG. 4A, and other related parts in the embodiments involved in FIGs. 2, 3, and 4, which will not be repeated here.

FIG. 6 is a schematic diagram illustrating a configuration method according to an embodiment of the present disclosure. As shown in FIG. 6, the embodiments of the present disclosure relate to a configuration method, which includes:
**In step S6101,** the network device sends first configuration information of a plurality of serving carriers to the terminal, where first parameters of the first patterns of the plurality of serving carriers configured in the first configuration information are related.

In some embodiments, the first configuration information is configured by the network device for the terminal.

In some embodiments, the related first parameters of the first patterns of the plurality of serving carriers cause the first patterns of the plurality of serving carriers to be configured with overlapping active periods.

In some embodiments, the first pattern is cell DTX or cell DRX.

In some embodiments, the first parameter is the cycle, the first duration, and the offset configured for the first patterns of the plurality of carriers.

In some embodiments, the first patterns of the plurality of carriers are configured with the same cycle, the same offset, and different first durations.

In some embodiments, the first patterns of the plurality of carriers are configured with the same cycle, the same offset, and the same first duration.

In some embodiments, the first parameters that are related to each other are first parameters that are integer multiples of each other.

In some embodiments, the difference between the offsets configured for the first patterns of the plurality of serving carriers is an integer multiple of the cycle.

In one example, the cycles of the first patterns of different serving carriers are integer multiples of each other, and the offsets of the first patterns of different serving carriers all satisfy: offset = first value + M * period, where the first values of different serving cells are the same.

In some embodiments, the plurality of serving carriers belong to the same carrier group.

In one example, the plurality of serving carriers are identified by the same carrier group.

In one example, the plurality of carriers belong to either FR1 (frequency range 1) or FR2 (frequency range 2).

Considering that different carrier groups correspond to different transmit and receive links, carriers within the same group need to be associated with each other. This allows the terminal's transmit and receive link to minimize its operating time. There is no need for this correlation constraint between carrier configurations of different groups, as they use different transmit and receive links.

This disclosure also provides an apparatus for implementing any of the above methods. For example, an apparatus is provided that includes a unit or a module for implementing the steps performed by the terminal in any of the above methods. Alternatively, another apparatus is provided that includes a unit or a module for implementing the steps performed by the network device (e.g., an access network device, a core network functional node, a core network device, etc.) in any of the above methods.

It should be understood that the division of units or modules in the above apparatus is only a logical functional division. In actual implementation, they can be fully or partially integrated into a single physical entity, or they can be physically separated. Furthermore, the units or modules in the apparatus can be implemented by a processor calling software: for example, the apparatus includes a processor connected to a memory containing instructions, the processor calls the instructions stored in the memory to implement any of the above methods or to implement the functions of the units or modules in the above device. The processor can be, for example, a general-purpose processor, such as a Central Processing Unit (CPU) or a microprocessor, and the memory can be internal or external to the apparatus. Alternatively, the units or modules in the apparatus can be implemented in the form of hardware circuits. The functionality of some or all of the units or modules can be achieved through the design of these hardware circuits, which can be understood as one or more processors. For example, in one implementation, the hardware circuit is an application-specific integrated circuit (ASIC), and the functionality of some or all of the units or modules is achieved through the design of the logical relationships between the components within the circuit. In another implementation, the hardware circuit can be implemented using a programmable logic device (PLD), such as a field-programmable gate array (FPGA), which can include a large number of logic gates. The connection relationships between the logic gates are configured through configuration files, thereby achieving the functionality of some or all of the units or modules. All units or modules of the above apparatus can be implemented entirely through the processor calling software, entirely through hardware circuits, or partially through processor calling software with the remaining parts implemented through hardware circuits.

In this embodiment, the processor is a circuit with signal processing capabilities. In one implementation, the processor can be a circuit with instruction read and execute capabilities, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits. The logical relationships of the aforementioned hardware circuits are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the process of the processor loading instructions to implement the functions of some or all of the above units or modules. Furthermore, it can also be a hardware circuit designed for artificial intelligence, which can be understood as an ASIC, such as a Neural Network Processing Unit (NPU), a Tensor Processing Unit (TPU), or a Deep Learning Processing Unit (DPU).

FIG. 7A is a schematic diagram of the structure of a terminal according to an embodiment of this disclosure. As shown in FIG. 7A, the terminal 7100 may include at least one of a transceiver module 7101, a processing module 7102, etc. In some embodiments, the transceiver module 7101 is used to receive first configuration information, which is used to configure first patterns on a plurality of serving carriers, each serving carrier corresponding to one first pattern, the first pattern being a cell discontinuous transmission mode or a cell discontinuous reception mode, and the first configuration information causing the first patterns of the plurality of serving carriers to have overlapping active regions in the time domain.

Optionally, the transceiver module 7101 is used to perform at least one of the communication steps (e.g., steps S2101, S2501, S2502, and S2503) performed by the terminal 101 in any of the above methods, which will not be elaborated here. Optionally, the processing module is used to perform at least one of the other steps (e.g., steps S2102 and S2504, but not limited thereto) performed by the terminal 101 in any of the above methods, which will not be elaborated here.

In some embodiments, the transceiver module may include a transmitting module and/or a receiving module, which may be separate or integrated. Optionally, the transceiver module may be interchangeable with a transceiver.

In some embodiments, the processing module may be a single module or may include multiple sub-modules. Optionally, the multiple sub-modules may each perform all or part of the steps required by the processing module. Optionally, the processing module may be interchangeable with a processor.

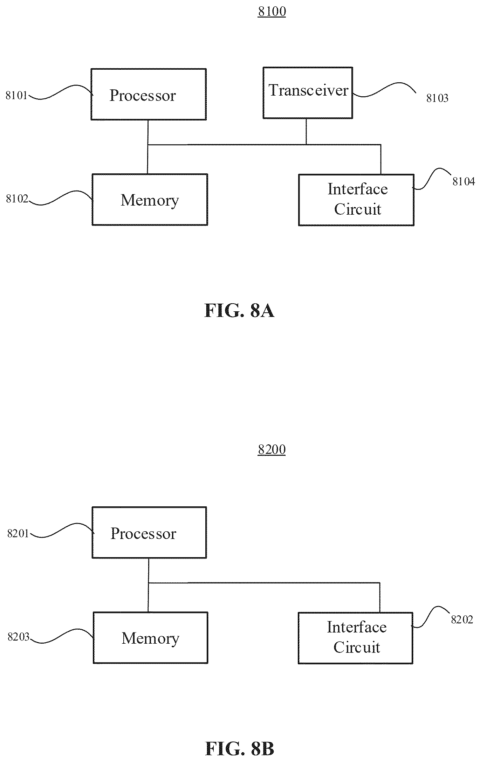

FIG. 8A is a schematic diagram of the structure of the communication device 8100 proposed in an embodiment of this disclosure. The communication device 8100 can be a network device (e.g., access network device, core network device, etc.), a terminal (e.g., user equipment, etc.), a chip, chip system, or processor that supports the network device in implementing any of the above methods, or a chip, chip system, or processor that supports the terminal in implementing any of the above methods. The communication device 8100 can be used to implement the methods described in the above method embodiments; for details, please refer to the descriptions in the above method embodiments.

As shown in FIG. 8A, the communication device 8100 includes one or more processors 8101. The processor 8101 can be a general-purpose processor or a dedicated processor, such as a baseband processor or a central processing unit (CPU). The baseband processor can be used to process communication protocols and communication data, while the CPU can be used to control communication devices (e.g., base stations, baseband chips, terminal devices, terminal device chips, DUs or CUs, etc.), execute programs, and process program data. The communication device 8100 is used to execute any of the above methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the transceivers 8103 perform at least one of the communication steps such as sending and/or receiving in the above method (e.g., steps S2101, S2501, S2502, and S2503, but not limited thereto), and the processor 8101 performs at least one of other steps (e.g., steps S2102 and S2504, but not limited thereto).

In some embodiments, a transceiver may include a receiver and/or a transmitter, which may be separate or integrated. Optionally, the terms transceiver, transceiver unit, transceiver device, transceiver circuit, etc., may be used interchangeably; the terms transmitter, transmitting unit, transmitter device, transmitting circuit, etc., may be used interchangeably; and the terms receiver, receiving unit, receiver device, receiving circuit, etc., may be used interchangeably.

In some embodiments, the communication device 8100 may include one or more interface circuits 8104. Optionally, the interface circuit 8104 is connected to the memory 8102, and the interface circuit 8104 can be used to receive signals from the memory 8102 or other devices, and can be used to send signals to the memory 8102 or other devices. For example, the interface circuit 8104 can read instructions stored in the memory 8102 and send the instructions to the processor 8101.

The communication device 8100 described in the above embodiments may be a network device or a terminal, but the scope of the communication device 8100 described in this disclosure is not limited thereto, and the structure of the communication device 8100 may not be limited by FIG. 8A. The communication device may be a standalone device or may be part of a larger device. For example, the communication device may be: (1) a standalone integrated circuit IC, or chip, or chip system or subsystem; (2) a collection of one or more ICs, optionally, the IC collection may also include storage components for storing data and programs; (3) an ASIC, such as a modem; (4) a module that can be embedded in other devices; (5) a receiver, terminal device, smart terminal device, cellular phone, wireless device, handheld device, mobile unit, vehicle device, network device, cloud device, artificial intelligence device, etc.; (6) others, etc.

FIG. 8B is a schematic diagram of the structure of chip 8200 according to an embodiment of this disclosure. For cases where the communication device 8100 can be a chip or a chip system, please refer to the schematic diagram of chip 8200 shown in FIG. 8B, but it is not limited thereto.

The chip 8200 includes one or more processors 8201, which are used to perform any of the above methods.

In some embodiments, chip 8200 further includes one or more interface circuits 8202. Optionally, the interface circuit 8202 is connected to memory 8203, and the interface circuit 8202 can be used to receive signals from memory 8203 or other devices, and the interface circuit 8202 can be used to send signals to memory 8203 or other devices. For example, the interface circuit 8202 can read instructions stored in memory 8203 and send the instructions to processor 8201.

In some embodiments, the interface circuit 8202 performs at least one of the communication steps such as sending and/or receiving in the above method (e.g., steps S2101, S2501, S2502, and S2503, but not limited thereto), and the processor 8201 performs at least one of other steps (e.g., steps S2102 and S2504, but not limited thereto).

In some embodiments, the terms interface circuit, interface, transceiver pin, transceiver, etc., can be used interchangeably.

In some embodiments, chip 8200 further includes one or more memories 8203 for storing instructions. Optionally, all or part of the memories 8203 may be located outside of chip 8200.

This disclosure also proposes a storage medium storing instructions that, when executed on a communication device 8100, cause the communication device 8100 to perform any of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a temporary storage medium.

This disclosure also provides a program product that, when executed by the communication device 8100, causes the communication device 8100 to perform any of the above methods. Optionally, the program product is a computer program product.

This disclosure also proposes a computer program that, when run on a computer, causes the computer to perform any of the above methods.

## Claims

1. A configuration method, comprising:
receiving first configuration information, wherein the first configuration information is used to configure first patterns on a plurality of serving carriers, with each serving carrier corresponding to one first pattern, wherein the first pattern is either a cell discontinuous transmission mode or a cell discontinuous reception mode, and the first configuration information causes the first patterns of the plurality of serving carriers to have overlapping active regions in time domain.

2. The configuration method according to claim 1, wherein the first configuration information comprises a plurality of pieces of second configuration information, each piece of second configuration information corresponding to the first pattern on at least one serving carrier.

3. The configuration method according to claim 2, wherein receiving the first configuration information comprises:
performing multiple receptions, receiving at least one of the plurality of pieces of second configuration information each time.

4. The configuration method according to any one of claims 1 to 3, wherein first parameters of the first patterns of the plurality of serving carriers configured by the first configuration information have an association relationship.

5. The configuration method according to claim 4, wherein the first parameters comprise at least one of cycle, offset and first duration, and the first duration is an active duration or inactive duration within one cycle.

6. The configuration method according to claim 5, wherein the first patterns of the plurality of serving carriers configured by the first configuration information have a same cycle, a same offset, and a same first duration.

7. The configuration method according to claim 5, wherein the first patterns of the plurality of serving carriers configured by the first configuration information have a same cycle, a same offset, and different first durations.

8. The configuration method according to claim 5, wherein,
the cycle of the first patterns of the plurality of serving carriers configured by the first configuration information is an integer multiple of a first cycle, and a difference in offset among the first patterns of different serving carriers is an integer multiple of the first cycle, wherein the first cycle is a smallest cycle among the first patterns of the plurality of serving carriers.

9. The configuration method according to any one of claims 1 to 8, wherein the plurality of serving carriers belong to a same carrier group.

10. The configuration method according to any one of claims 1 to 8, wherein the plurality of serving carriers belong to a first frequency range, or the plurality of serving carriers belong to a second frequency range.

11. A configuration method, comprising:
sending first configuration information, wherein the first configuration information is used to configure first patterns on a plurality of serving carriers, with each serving carrier corresponding to one first pattern, wherein the first pattern is either a cell discontinuous transmission mode or a cell discontinuous reception mode, and the first configuration information causes the first patterns of the plurality of serving carriers to have overlapping active regions in time domain.

12. The configuration method according to claim 11, wherein the first configuration information comprises a plurality of pieces of second configuration information, each piece of second configuration information corresponding to the first pattern on at least one serving carrier.

13. The configuration method according to claim 12, wherein sending the first configuration information comprises:
performing multiple transmission, sending at least one of the plurality of pieces of second configuration information each time.

14. The configuration method according to any one of claims 11 to 13, wherein first parameters in the first patterns of the plurality of serving carriers configured by the first configuration information have an association relationship.

15. The configuration method according to any one of claims 11 to 14, wherein the first parameters comprise at least one of cycle, offset and first duration, and the first duration is an active duration or inactive duration within one cycle.

16. The configuration method according to claim 15, wherein the first patterns of the plurality of serving carriers configured by the first configuration information have a same cycle, a same offset, and a same first duration.

17. The configuration method according to claim 15, wherein the first patterns of the plurality of serving carriers configured by the first configuration information have a same cycle, a same offset, and different first durations.

18. The configuration method according to claim 15, wherein,
the cycle of the first patterns of the plurality of serving carriers configured by the first configuration information is an integer multiple of a first cycle, and a difference in offset among the first patterns of different serving carriers is an integer multiple of the first cycle, wherein the first cycle is a smallest cycle among the first patterns of the plurality of serving carriers.

19. The configuration method according to any one of claims 11 to 18, wherein the plurality of serving carriers belong to a same carrier group.

20. The configuration method according to any one of claims 11 to 18, wherein the plurality of serving carriers belong to a first frequency range, or the plurality of serving carriers belong to a second frequency range.

21. A terminal, comprising:
a transceiver module, configured to receive first configuration information, wherein the first configuration information is used to configure first patterns on a plurality of serving carriers, with each serving carrier corresponding to one first pattern, wherein the first pattern is either a cell discontinuous transmission mode or a cell discontinuous reception mode, and the first configuration information causes the first patterns of the plurality of serving carriers to have overlapping active regions in time domain.

22. A network device, comprising:
a transceiver module, configured to send first configuration information, wherein the first configuration information is used to configure first patterns on a plurality of serving carriers, with each serving carrier corresponding to one first pattern, wherein the first pattern is either a cell discontinuous transmission mode or a cell discontinuous reception mode, and the first configuration information causes the first patterns of the plurality of serving carriers to have overlapping active regions in time domain.

23. A terminal, comprising:
one or more processors;
wherein the terminal is configured to execute the configuration method according to any one of claims 1 to 10.

24. A network device, comprising:
one or more processors;
wherein the network device is configured to execute the configuration method according to any one of claims 11 to 20.

25. A communication system comprising a terminal and a network device, wherein the terminal is configured to implement the configuration method according to any one of claims 1 to 10, and the network device is configured to implement the configuration method according to any one of claims 11 to 20.

26. A storage medium storing instructions that, when executed on a communication device, cause the communication device to perform the configuration method according to any one of claims 1 to 10 or 11 to 20.
